# FASCICULE DE BREVET EUROPEEN

(11) **EP 0 734 496 B1**
(45) Date de publication et mention de la délivrance du brevet: **20.05.1998**
(21) Numéro de dépôt: 95900818.6
(22) Date de dépôt: 09.11.1994
(51) Int. Cl.: F16D 65/56

(54) **ENTRETOISE DE REGLAGE AUTOMATIQUE POUR FREIN A TAMBOUR**
AUTOMATISCH NACHSTELLBARE STREBE FÜR EINE TROMMELBREMSE
AUTOMATIC ADJUSTING STRUT FOR DRUM BRAKE

(30) Priorité: 13.12.1993 FR 9314907
(43) Date de publication de la demande: 02.10.1996
(73) Titulaire: Bosch Systemes de Freinage, 93700 Drancy (FR)
(72) Inventeur: LE MOIGNE, Daniel, F-44124 Le-Plessis-Grammoire (FR); TEMPESTINI, Serge, F-93400 St. Ouen (FR)
(74) Mandataire: Bentz, Jean-Paul
(86) Numéro de dépôt international: FR9401309
(87) Numéro de publication internationale: WO9516864

(56) Documents cités:
- EP-A- 0 219 384
- FR-A- 2 509 405
- US-A- 4 503 949

## Description

La présente invention concerne le domaine des freins à tambour, en particulier destinés à équiper les véhicules automobiles, et elle concerne plus précisément les dispositifs de réglage automatique destinés à compenser l'usure des éléments de friction des segments de tels freins à tambour, ces dispositifs commandant l'allongement d'une entretoise, disposée entre les segments, en fonction de l'usure des éléments de friction, pour définir une distance d'écartement minimale entre les segments en fonction de l'usure des éléments de friction portés par ces segments, c'est à dire pour assurer une course relativement constante aux moyens d'actionnement du frein à tambour.

De telles entretoises à dispositif de réglage automatique sont bien connues dans la technique antérieure, comme par exemple des documents EP-A-0 077 726, EP-A-0 219 384 ou EP-A-0 262 014.

Dans ces documents, l'entretoise comprend un ensemble vis-écrou commandé par un cliquet sollicitant une denture solidaire d'un des éléments du système vis-écrou, le cliquet étant porté par une lame élastique solidaire de l'entretoise, la lame élastique étant écartée de l'entretoise, lorsque le frein est en position de repos, au moyen d'un levier autorisant par basculement le rapprochement entre la lame élastique et l'entretoise lorsque les segments sont sollicités en écartement par les moyens d'actionnement, le levier comportant un premier bras en appui sur l'écrou du système vis-écrou et percé d'une ouverture traversée par la vis du système vis-écrou, et un second bras formant un angle supérieur à 90 degrés par rapport au premier bras, et disposé entre l'entretoise et la lame élastique.

La conception de ces dispositifs connus impose, notamment à l'écrou du système vis-écrou, des efforts parasites, qui augmentent le frottement de l'écrou sur la vis, et qui peuvent ainsi empêcher l'allongement de l'entretoise, jusqu'à ce que les efforts extérieurs qui s'exercent sur elle soient suffisants pour vaincre ces frottements et provoquent l'allongement désiré. Il s'ensuit un fonctionnement erratique des dispositifs de réglage automatique connus.

De plus, l'effet néfaste de ces efforts parasites est très largement amplifié par le biais des tolérances de fabrication des différents éléments constituant ces dispositifs, de sorte que l'allongement obtenu est très variable d'une entretoise à l'autre, toutes choses étant égales par ailleurs.

Il en résulte que les entretoises connues ne remplissent que très imparfaitement leur rôle de fixation d'une distance minimale entre les segments, et définissent très souvent une distance inférieure à la distance minimale désirée, par suite de l'absence d'allongement de l'entretoise. Il en résulte alors une course excessive des moyens d'actionnement quand ceux-ci sont mécaniques, ou une consommation excessive de fluide lorsque les moyens d'actionnement sont hydrauliques.

La présente invention a par conséquent pour objet de proposer une entretoise de réglage automatique pour frein à tambour qui ne présente pas ces inconvénients, c'est à dire qui soit exempte d'efforts parasites au niveau du système vis-écrou, de façon à assurer un fonctionnement optimal du dispositif de réglage automatique et une distance entre les segments correspondant effectivement à la distance minimale désirée.

Dans ce but, selon l'invention, le premier bras du levier commandant le basculement de la lame élastique est en appui sur deux zones de l'écrou du système vis-écrou sensiblement diamétralement opposées. De la sorte, les efforts exercés par le levier sur l'écrou ont une résultante sensiblement axiale, et n'engendrent donc pas sur lui d'efforts parasites.

L'invention sera mieux comprise, et d'autres buts, caractéristiques et avantages ressortiront clairement de la description qui suit d'un exemple de réalisation donné à titre non limitatif, en référence aux dessins annexés sur lesquels :
- La Figure 1 est une vue en plan d'un frein à tambour de l'art antérieur, et susceptible de recevoir une entretoise de réglage automatique réalisée conformément à la présente invention;
- La Figure 2 est une vue agrandie, en coupe partielle selon la ligne II-II de la Figure 1, d'une entretoise de réglage automatique de l'art antérieur;
- La Figure 3 est une vue, encore agrandie, du système à vis-écrou et levier de l'entretoise de la Figure 2;
- Les Figures 4A et 4B sont des vues, respectivement en plan et en coupe semblable à celle de la Figure 3, d'un système à vis-écrou et levier pour une entretoise réalisée conformément à la présente invention;
- Les Figures 5A et 5B sont des vues, respectivement en plan et en coupe, d'une variante du levier des Figures 4A et 4B, et
- Les Figures 6A et 6B sont des vues, respectivement de côté et en coupe, d'un écrou destiné à coopérer avec le levier des Figures 5A et 5B.

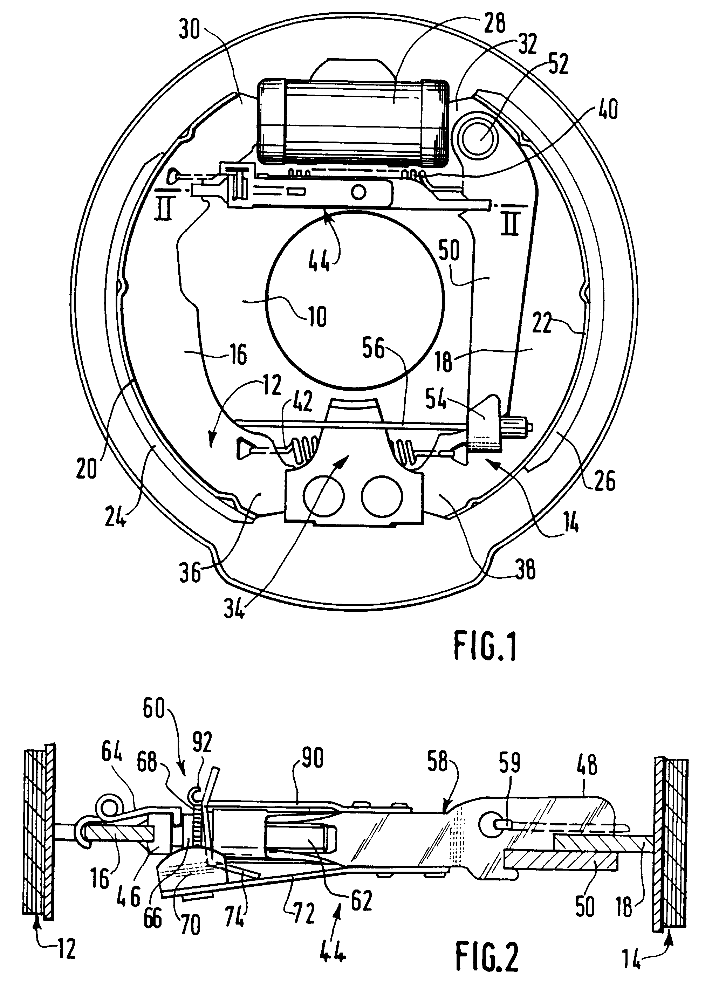

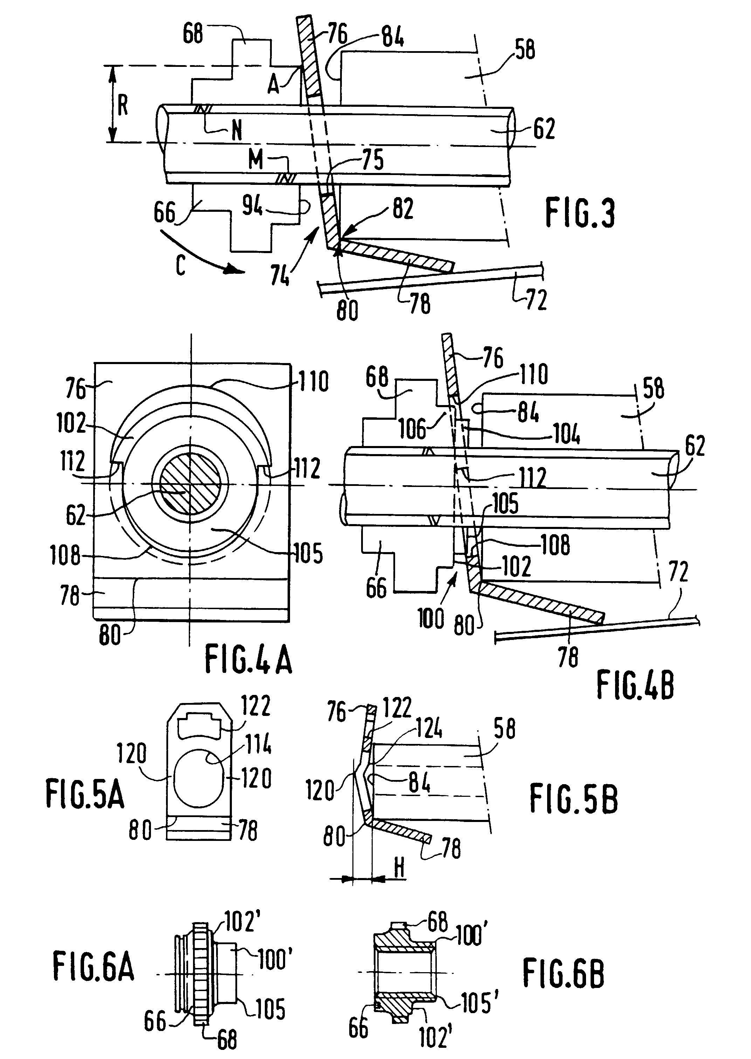

On a représenté sur la Figure 1 un frein à tambour de conception classique, qui comprend une plaque support 10 prévue pour être associée à une partie fixe d'un véhicule (non représentée), et sur laquelle sont reçus de façon coulissante deux segments de frein 12 et 14. Chacun des segments 12 et 14 comporte une âme sensiblement plate 16, 18 et une jante arquée 20, 22 sur laquelle est fixé un élément de friction 24, 26.

Des moyens d'actionnement, comme par exemple un cylindre de roue 28, sont disposés entre deux extrémités 30 et 32 des segments 12 et 14, et un bloc d'ancrage 34, solidaire de la plaque support 10, est disposé entre deux autres extrémités 36 et 38 des segments 12 et 14. Des ressorts de rappel 40 et 42 sont disposés au voisinage du cylindre de roue et du bloc d'ancrage afin de solliciter les extrémités 30 et 32 des segments contre le cylindre de roue et les extrémités 36 et 38 contre le bloc d'ancrage.

Une entretoise, désignée dans son ensemble par la référence 44, est disposée au voisinage du cylindre de roue 28 de façon à définir la distance séparant au repos les extrémités 30 et 32 des segments. Les extrémités 46 et 48 comportent chacune une encoche recevant l'âme 16, 18 de chaque segment 12 et 14.

Dans l'exemple représenté sur la Figure 1, l'encoche formée dans l'extrémité 48 reçoit également un levier d'actionnement mécanique 50, monté pivotant sur l'extrémité 32 du segment 14 au moyen d'un rivet formant pivot 52, et dont l'extrémité libre 54 reçoit une extrémité d'un câble de commande de frein à main ou de frein de secours 56, actionné depuis l'habitacle du véhicule.

Comme on le voit mieux sur la Figure 2, l'entretoise 44 est formée d'un corps 58 formant l'extrémité 48 en appui par l'intermédiaire d'un ressort 59 sur le segment 14 et sur le levier de frein à main 50, et d'un système à vis-écrou, désigné dans son ensemble par la référence 60, formant l'extrémité 46, en appui sur le segment 12.

Le système à vis-écrou 60 comporte une vis 62 dont la tête 46 est maintenue en engagement avec l'âme 16 du segment 12 par un ressort 64, et dont la tige est reçue librement dans une ouverture axiale du corps d'entretoise 58, et un écrou 66 engagé sur la vis 62 et portant extérieurement une denture 68 destinée à coopérer sélectivement avec un cliquet 70 solidaire de l'extrémité en porte-à-faux d'une lame élastique 72 montée sur le corps d'entretoise 58.

L'entretoise 44 comporte également un levier 74, représenté plus en détail sur la Figure 3, formé d'un premier bras 76 muni d'une ouverture 75 dans laquelle pénètre librement la vis 62, ce bras étant interposé entre l'écrou 66 et la face d'extrémité adjacente du corps d'entretoise 58, et d'un second bras 78 dont l'extrémité libre sollicite en écartement la lame élastique 72. Les premier 76 et second 78 bras du levier 74 sont sensiblement rectilignes et forment entre eux un angle supérieur à 90 degrés, et typiquement voisin de 100 degrés. Le levier 74 forme ainsi un dièdre en appui par son sommet 80 sur un bord 82 de la face plane d'extrémité 84 du corps 58, et peut basculer autour de ce bord 82.

L'entretoise 44 peut enfin comporter un système de verrouillage thermique, tel que celui qui est décrit dans le document EP-A-0 219 384 précité, et constitué d'un bilame 90, dont une extrémité est fixée au corps d'entretoise 58 et dont l'autre extrémité 92 pénètre dans une ouverture du premier bras, et est susceptible d'agir sur ce bras pour empêcher le basculement du levier et interdire en conséquence le fonctionnement du dispositif de réglage automatique en cas de surchauffe du frein à tambour.

Le fonctionnement du frein à tambour et du dispositif de réglage automatique qui viennent d'être décrits est classique et ne sera rappelé ici que pour mémoire, en référence aux Figures 2 et 3.

Au repos, le ressort 40 sollicite les segments 12 et 14 l'un vers l'autre, et par conséquent les extrémités 46 et 48 de l'entretoise 44 l'une vers l'autre. Ce faisant, le premier bras 76 du levier 74 est plaqué en appui contre la face plane d'extrémité 84 du corps d'entretoise 58 par l'écrou 66. Le second bras 78 du levier 74 sollicite alors la lame élastique 72 en écartement du corps 58, ce qui dégage le cliquet 70 de la denture 68 de l'écrou 66.

Lorsque le cylindre de roue 28 est actionné, les extrémités 30 et 32 des segments 12 et 14 sont écartées l'une de l'autre de sorte que les éléments de friction 24 et 26 sont amenés en engagement de friction avec le tambour de frein (non représenté) de façon à créer un couple de freinage.

Simultanément, le corps 58 et l'ensemble 60 sont écartés l'un de l'autre sous l'action des ressorts 59 et 64. La lame élastique 72 en appui sur le second bras 78 du levier 74 tend à faire basculer ce dernier autour du bord 82 dans la mesure permise par le mouvement relatif de l'écrou 66 par rapport au corps 58. La lame 72 se rapproche alors du corps 58, de même que le cliquet 70 se rapproche de la denture 68.

Si l'un au moins des éléments de friction 24 ou 26 présente une usure excessive, le cylindre de roue doit alors écarter les segments d'une valeur supérieure à une valeur prédéterminée pour qu'ils viennent engager le tambour de frein. L'écrou 66 s'éloigne alors du corps 58 d'une valeur supérieure à cette valeur prédéterminée, le cliquet 70 s'engage dans la denture 68 et entraîne l'écrou 66 en rotation, ce qui provoque le dévissage de l'écrou 66 sur la vis 62, et par conséquent l'éloignement de l'écrou 66 par rapport à la tête 46 de la vis 62.

Lorsque le freinage est relâché, le ressort 40 rapproche les segments 12 et 14 l'un de l'autre, ce qui a pour résultat de rapprocher l'écrou 66 du corps 58. La rotation inverse de l'écrou sur la vis 62 est empêchée par le frottement entre l'écrou 66 et le premier bras 76 du levier 74. Cet écrou ayant été vissé par l'action précédente sur la vis 62, l'entretoise 44 revient dans une position où elle possède une longueur supérieure à celle qu'elle avait avant l'action de freinage.

Lors du freinage suivant, le cylindre de roue devra alors écarter les segments d'une valeur inférieure à la valeur précédente. Si cette valeur est encore supérieure à la valeur prédéterminée, le même processus d'allongement de l'entretoise se reproduit.

On comprend donc que l'entretoise 44 permet de définir une distance d'écartement minimale entre les segments, fonction de l'usure des éléments de friction, pour que le cylindre de roue 28 ou le câble 56 n'ait à les actionner que sur cette distance minimale. Une telle distance minimale correspond à ce qu'il est convenu d'appeler dans la technique le jeu fonctionnel du frein à tambour.

On voit d'autre part sur la Figure 3 que, lors de l'actionnement du frein à tambour, le basculement du levier 74 a lieu sous l'action de la lame 72 sur le second bras 78 de sorte que le premier bras 76 reste constamment en contact avec l'écrou 66, ce contact s'effectuant en un point A de la périphérie de la face 94 de l'écrou tournée vers la face 84 du corps 58.

Le premier bras 76 du levier exerce alors sur ce point A une force sensiblement parallèle à l'axe de l'entretoise, cet axe étant pratiquement confondu avec l'axe de la vis 62, cette force agissant à une distance R de cet axe.

Il s'ensuit que l'écrou 66 est soumis à un couple de rotation dans le sens de la flèche C sur la Figure 3, et n'est en contact avec la tige de la vis 62 que par les filets situés aux endroits tels que M et N sur la Figure 3, qui sont ainsi les seuls à participer à l'interaction entre l'écrou 66 et la vis 62 lorsque le dispositif de réglage automatique entre en jeu, les autres filets n'ayant aucune action. Des efforts parasites sont donc engendrés par le bras 76 dans l'écrou 66 qui font naître des contraintes indésirables générant des frottements excessifs au niveau de l'interaction vis 62-écrou 66.

Ces frottements peuvent être tels qu'ils empêchent la rotation de l'écrou 66 sous l'action du cliquet 70, et interdisent ainsi l'allongement automatique de l'entretoise lorsque celui-ci est nécessaire. Les moyens d'actionnement, hydraulique comme le cylindre de roue 28 ou mécanique comme le levier de frein à main 50, doivent donc effectuer une course importante pour actionner le frein à tambour.

Ce problème est résolu grâce à l'invention, en modifiant l'appui du premier bras de levier 76 sur l'écrou 66 de façon à éliminer ces contraintes parasites.

On voit sur les Figures 4A et 4B que l'écrou 66 est formé, du côté destiné à venir en regard de la face 84 du corps d'entretoise 58, avec une partie cylindrique 100, Selon ce mode de réalisation, la partie cylindrique 100 est étagée de façon à présenter un épaulement 102 entre une partie cylindrique de plus petit diamètre 104, située la plus à l'extérieur, et une partie intermédiaire 106. La partie cylindrique 104 est limitée par une face circulaire plane 105.

Le premier bras 76 du levier 74 est formé avec une ouverture de forme générale oblongue. La périphérie de cette ouverture est formée d'un premier contour sensiblement semi-circulaire 108, dont le rayon est compris entre ceux des parties cylindriques 104 et 106 de l'écrou 66, et d'un second contour sensiblement semi-circulaire 110, dont le rayon est supérieur à celui de la partie intermédiaire 106 de l'écrou 66. Les contours 108 et 110 sont raccordés par deux épaulements 112, situés tous deux sensiblement dans un plan diamétral de l'ouverture oblongue et donc à la même distance du sommet 80 du dièdre formé par les deux bras du levier 74.

Lorsque l'entretoise, comportant l'écrou et le levier qui viennent d'être décrits, est installée dans un frein à tambour, et que ce dernier est en position de repos, l'ensemble vis-écrou 60 est sollicité vers le corps 58, comme on l'a vu plus haut.

Dans cette position, on comprend que la partie cylindrique 104 de l'écrou 66 pénètre entièrement dans l'ouverture du bras 76, puisqu'elle a un rayon inférieur à celui du contour 108, et a fortiori à celui du contour 110. La partie cylindrique 104 est formée avec une hauteur, mesurée axialement entre la face 105 et l'épaulement 102, légèrement supérieure à l'épaisseur du bras 76, de sorte que, dans la position de repos du frein à tambour, la face 105 de l'écrou 66 vient en butée sur la face 84 du corps 58.

Lorsque le cylindre de roue 28 est actionné, les extrémités 30 et 32 des segments 12 et 14 sont écartées l'une de l'autre, de même que le corps 58 et l'ensemble vis-écrou 60 par l'intermédiaire des ressorts 59 et 64 agissant sue le corps 58 et sur la tête 46 de la vis 62.

Comme précédemment, la lame élastique 72 en appui sur le second bras 78 du levier 74 tend à faire basculer ce dernier autour du bord 82 du corps 58, le mouvement de rotation du levier 74 étant limité par l'écrou 66 avec lequel le premier bras 76 reste en contact.

Grâce à la configuration particulière, selon l'invention, de l'ouverture pratiquée dans le premier bras 76, conjuguée avec la forme particulière de la partie cylindrique 100 de l'écrou 66, le contact entre le bras 76 et l'écrou 66 s'effectue par l'intermédiaire des épaulements 112.

Le premier bras 76 du levier exerce donc sur l'écrou 66, par ces épaulements 112, des forces sensiblement égales et de même sens, dont la résultante est une force s'appliquant au milieu de leur point d'application, c'est à dire au voisinage de l'axe de symétrie de l'écrou 66 puisque les épaulements 112 sont situés dans un plan sensiblement diamétral de l'ouverture du bras 76.

Il en résulte ainsi que, lorsque le corps 58 et la tête 46 de la vis sont sollicités en écartement l'un de l'autre au cours de l'actionnement du frein, le bras 76 du levier sollicite l'écrou 66 dans la direction de la tête de la vis en lui appliquant une force dirigée sensiblement suivant son axe de symétrie. Il s'ensuit que tous les filets de l'écrou 66 participent à la coopération de ce dernier avec le filetage de la vis 62, et que la rotation de l'écrou sur la vis, lorsque le cliquet 70 engage la denture 68, a lieu dans des conditions optimales.

D'autre part, le point d'application de la force transmise par le bras 76 du levier 74 à l'écrou 66 étant plus proche du centre de rotation 80 de ce levier que dans l'art antérieur, cette force transmise à l'écrou est également supérieure. Il en découle que, lors du relâchement du freinage, la rotation inverse de l'écrou est empêchée dans de meilleures conditions.

Cet accroissement de la force d'action du levier sur l'écrou est obtenu au prix d'une diminution corrélative de la course du point d'application de cette force, que l'on pourra compenser en augmentant l'angle entre les deux bras 76 et 78 du levier 74 pour obtenir une course axiale des épaulements 112 de même valeur que la course du point A dans l'art antérieur.

Les épaulement 112 ont été représentés, sur les Figures 4A et 4B, légèrement décalés par rapport à l'axe de symétrie de l'écrou 66 et de la vis 62, mais il est bien clair qu'ils peuvent être alignés avec cet axe, ou même décalés par rapport à cet axe dans l'autre sens, c'est à dire du côté du sommet 80 par rapport au petit diamètre de l'ouverture oblongue.

Un avantage important procuré par l'invention réside également dans le fait que l'écrou 66 vient directement en contact avec le corps 58, par l'intermédiaire de leurs faces 94 et 84, sans que le premier bras du levier soit intercalé entre eux. Il en résulte que les tolérances de fabrication du levier n'ont aucune influence sur le fonctionnement de l'entretoise, et que le jeu fonctionnel du frein à tambour, c'est à dire la distance parcourue par l'écrou 66, par rapport au corps 58, avant que le cliquet 70 n'engage la denture 68, n'est déterminé que par l'écrou 66. On a pu ainsi mesurer sur divers freins à tambour des jeux fonctionnels pratiquement égaux aux jeux fonctionnels théoriques.

On a représenté sur les Figures 5 et 6 une variante du mode de réalisation qui vient d'être décrit. On voit sur les Figures 6A et 6B que l'écrou 66 est formé avec une partie cylindrique 100' non étagée, de sorte que l'épaulement 102' est formé à la jonction de cette partie cylindrique 100' avec le corps de l'écrou 66.

D'autre part, comme on le voit sur les Figures 5A et 5B, le premier bras 76 du levier 74 est formé avec une ondulation s'étendant parallèlement au sommet 80 de l'angle entre les deux bras du levier 74, et pratiquée sensiblement selon le petit diamètre d'une ouverture oblongue 114 du bras 76, ce petit diamètre étant légèrement supérieur au diamètre de la partie cylindrique 100' de l'écrou 66. Le bras 76 du levier présente ainsi deux sommets 120 de part et d'autre de l'ouverture 114, selon sensiblement un diamètre de celle-ci.

De façon analogue au mode de réalisation précédent, on prévoira pour l'ondulation une hauteur H, mesurée axialement entre la face 84 du corps 58 et les sommets 120, lorsque le levier 74 est en place sur le corps 58 et que le second bras 78 en est écarté au maximum, ainsi qu'on l'a représenté sur la Figure 5B, légèrement inférieure à la hauteur de la partie cylindrique 100' de l'écrou 66, mesurée axialement entre l'épaulement 102' et la face 105'.

Lorsque l'entretoise est assemblée avec l'écrou et le levier des Figures 5 et 6, on comprend que les sommets 120 du bras 76 viennent coopérer, lorsque le cylindre de roue 28 ou le levier 50 est actionné, avec l'épaulement 102' de l'écrou 66, de manière identique à la description ci-dessus, en procurant les mêmes avantages, à savoir une force appliquée sur l'écrou 66 sensiblement suivant son axe de symétrie, pour faciliter sa rotation sous l'effet du cliquet 70 au début d'un freinage, et pour au contraire l'empêcher lors du relâchement d'un freinage

On voit donc bien qu'on a réalisé, selon la présente invention, une entretoise de réglage automatique pour frein à tambour, dans laquelle le levier exerce sur l'écrou des forces dont la résultante est appliquée sensiblement selon l'axe de symétrie de cet écrou. Il en résulte que l'écrou est sollicité par le levier dans des conditions optimales, et n'est plus le siège de contraintes ou d'efforts parasites, et qu'ainsi la rotation de l'écrou est facilitée lorsqu'elle est désirée, et est au contraire rendue plus difficile lorsqu'elle n'est pas désirée.

On voit de plus que seuls le levier et l'écrou ont été modifiés par rapport à ceux d'une entretoise de l'art antérieur. Il en résulte un avantage très important de l'invention, à savoir que les entretoises connues pourront facilement être adaptées, lors d'une opération d'entretien du frein à tambour ou à titre préventif, pour y incorporer les enseignements de la présente invention.

On pourra à cet égard pratiquer dans le bras 76 du levier une ouverture supplémentaire 122, comme on l'a représenté sur les Figures 5A et 5B, pour y faire passer l'extrémité 92 d'un bilame lorsque l'entretoise en est munie. Dans le cas d'un bras de levier coudé comme celui des Figures 5A et 5B, on pourra pratiquer sur le bras 76 une seconde ondulation 124 de sens inverse à la première ondulation 120 pour que l'ouverture 122 occupe relativement au bilame 90, lorsque le frein est en position de repos, approximativement le même emplacement que celui qui est pratiqué dans un levier de l'art antérieur, de sorte que le bilame continue d'assurer sa fonction de verrouillage thermique après avoir installé l'écrou et le levier de l'invention sur l'entretoise.

## Revendications

1. Entretoise de réglage automatique pour frein à tambour, destinée à être montée au voisinage de moyens d'actionnement (28,50) disposés entre deux premières extrémités (30,32) de deux segments (12,14) garnis d'éléments de friction (24,26), l'entretoise (44) étant en appui par chacune de ses extrémités (46,48) sur chacun des deux segments (12,14) et comportant un corps (58) et un dispositif d'allongement automatique (62,68,70) en fonction de l'usure des éléments de friction (24,26), ce dispositif étant formé par un système vis-écrou (60) commandé par un cliquet (70) sollicitant une denture (68) solidaire d'un (66) des éléments du système vis-écrou (60), le cliquet (70) étant porté par une lame élastique (72) solidaire du corps (58) de l'entretoise (44), la lame élastique (72) étant écartée du corps (58) de l'entretoise (44), lorsque le frein est en position de repos, au moyen d'un levier (74) autorisant par basculement le rapprochement entre la lame élastique (72) et le corps (58) de l'entretoise (44) lorsque les segments (12,14) sont sollicités en écartement par les moyens d'actionnement (28,50), le levier (74) comportant un premier bras (76) en appui sur l'écrou (66) du système vis-écrou (60) et percé d'une ouverture oblongue (108,110,112;114) traversée par la vis (62) du système vis-écrou (60), et un second bras (78) formant un sommet (80) d'angle supérieur à 90 degrés par rapport au premier bras (76) et disposé entre le corps (58) de l'entretoise (44) et la lame élastique (72), l'entretoise (44) étant caractérisée par le fait que le premier bras (76) du levier (74) est en appui sur l'écrou (66), lorsque les moyens d'actionnement (28,50) sont mis en oeuvre, en deux zones (112,120) sensiblement diamétralement opposées par rapport à l'axe de symétrie de l'écrou (66).

2. Entretoise selon la revendication 1, caractérisée en ce que l'écrou (66) est formé avec une partie cylindrique étagée (100) présentant un épaulement (102) entre une partie cylindrique de plus petit diamètre (104) et une partie intermédiaire (106), et en ce que l'ouverture (108,110,112) dans le premier bras (76) du levier (74) comporte un premier contour (108) sensiblement semi-circulaire dont le rayon est compris entre ceux des parties cylindriques (104,106) de la partie cylindrique étagée (100) de l'écrou (66), et un second contour (110) sensiblement semi-circulaire dont le rayon est supérieur à celui de la partie intermédiaire (106) de la partie cylindrique étagée (100) de l'écrou (66), les premier (108) et second (110) contours étant raccordés par deux épaulements (112), le premier bras (76) du levier (74) étant en appui sur l'épaulement (102) de l'écrou (66), lorsque les moyens d'actionnement (28,50) sont mis en oeuvre, par les épaulements (112).

3. Entretoise selon la revendication 2, caractérisée en ce que la hauteur de la partie cylindrique (104) de plus petit diamètre est légèrement supérieure à l'épaisseur du premier bras (76) du levier (74).

4. Entretoise selon la revendication 1, caractérisée en ce que l'écrou (66) est formé avec une partie cylindrique (100'), un épaulement (102') étant formé à la jonction entre la partie cylindrique (100') et le corps de l'écrou (66), et en ce que le premier bras (76) du levier (74) est formé avec une ondulation s'étendant parallèlement au sommet (80) de l'angle entre les premier (76) et second (78) bras du levier (74) et sensiblement selon le petit diamètre de l'ouverture oblongue (114), ce petit diamètre étant légèrement supérieur au diamètre de la partie cylindrique (100'), le premier bras (76) du levier (74) présentant ainsi deux sommets (120) de part et d'autre de l'ouverture (114), le premier bras (76) du levier (74) étant en appui sur l'écrou (66), lorsque les moyens d'actionnement sont mis en oeuvre, par les sommets (120).

5. Entretoise selon la revendication 4, caractérisée en ce que la hauteur de la partie cylindrique (100') de l'écrou (66) est légèrement supérieure à la hauteur (H) des sommets (120) de l'ondulation.

6. Entretoise selon l'une quelconque des revendications précédentes, caractérisée en ce que l'écrou (66) est en appui, lorsque les moyens d'actionnement (28,50) sont au repos, directement sur une face (84) du corps (58) de l'entretoise (44).

## Patentansprüche

1. Automatisch einstellbares Zwischenstück für eine Trommelbremse, das dafür vorgesehen ist, in der Nähe von Betätigungsmitteln (28, 50) angeordnet zu werden, die zwischen zwei ersten Enden (30, 32) von zwei Segmenten (12, 14) angeordnet sind, die mit Reibelementen (24, 26) versehen sind, wobei das Zwischenstück (44) mit seinen beiden Enden (46, 48) sich jeweils an einem der beiden Segmente (12, 14) abstützt und einen Körper (58) sowie eine Vorrichtung (62, 68, 70) zur automatischen Längenzunahme in Abhängigkeit vom Verschleiß der Reibelemente (24, 26) enthält, wobei diese Vorrichtung durch ein System (60) aus Schraube und Mutter gebildet ist, das von einer Sperrklinke (70) gesteuert wird, die eine Verzahnung (68) beaufschlagt, die fest mit einem (66) der Elemente des Systems (60) aus Schraube und Mutter verbunden ist, wobei die Sperrklinke (70) von einer elastischen Zunge (72) getragen ist, die fest mit dem Körper (58) des Zwischenstücks (44) verbunden ist, wobei die elastische Zunge (72), wenn sich die Bremse in der Ruhestellung befindet, von dem Körper (58) des Zwischenstücks (44) mittels eines Hebels (74) beabstandet ist, der durch Verschwenken das Annähern zwischen der elastischen Zunge (72) und dem Körper (58) des Zwischenstücks (44) ermöglicht, wenn die Segmente (12, 14) durch die Betätigungsmittel (28, 50) auseinandergedrückt werden, wobei der Hebel (74) einen ersten Arm (76) enthält, der an der Mutter (66) des Systems (60) aus Schraube und Mutter anliegt und von einer länglichen Öffnung (108, 110, 112; 114) durchbrochen ist, die von der Schraube (62) des Systems (60) aus Schraube und Mutter durchquert wird, und einen zweiten Arm (78), der mit dem ersten Arm (76) die Spitze (80) eines Winkels bildet, der größer als 90° ist, und zwischen dem Körper (58) des Zwischenstücks (44) und der elastischen Zunge (72) angeordnet ist, wobei das Zwischenstück (44) dadurch gekennzeichnet ist, daß der erste Arm (76) des Hebels (74) an der Mutter (66), wenn die Betätigungsmittel (28, 50) betätigt werden, in zwei Bereichen (112, 120) anliegt, die bezüglich der Symmetrieachse der Mutter (66) einander im wesentlichen diametral gegenüber liegen.

2. Zwischenstück nach Anspruch 1, dadurch gekennzeichnet, daß die Mutter (66) mit einem gestuften zylindrischen Abschnitt (100) ausgebildet ist, der einen Absatz (102) zwischen einem zylindrischen Abschnitt (104) mit kleinstem Durchmesser und einem Zwischenabschnitt (106) aufweist, und daß die Öffnung (108, 110, 112) in dem ersten Arm (76) des Hebels (74) eine im wesentlichen halbkreisförmige erste Kontur (108) aufweist, deren Radius zwischen denjenigen der zylindrischen Abschnitte (104, 106) des gestuften zylindrischen Abschnittes (100) der Mutter (66) liegt, und eine im wesentlichen halbkreisförmige zweite Kontur (110), deren Radius größer als derjenige des Zwischenabschnittes (106) des gestuften zylindrischen Abschnittes (100) der Mutter (66) ist, wobei die erste Kontur (108) und die zweite Kontur (110) durch zwei Absätze (112) miteinander verbunden sind, wobei der erste Arm (76) des Hebels (74) an dem Absatz (102) der Mutter (66) mittels der Absätze (112) anliegt, wenn die Betätigungsmittel (28, 50) betätigt werden.

3. Zwischenstück nach Anspruch 2, dadurch gekennzeichnet, daß die Höhe des zylindrischen Abschnittes (104) mit dem kleinerem Durchmesser geringfügig größer als die Dicke des ersten Armes (76) des Hebels (74) ist.

4. Zwischenstück nach Anspruch 1, dadurch gekennzeichnet, daß die Mutter (66) mit einem zylindrischen Abschnitt (100') gebildet ist, wobei am Übergang zwischen dem zylindrischen Abschnitt (100') und dem Körper der Mutter (66) ein Absatz (102') gebildet ist, und daß der erste Arm (76) des Hebels (74) mit einem Knick ausgebildet ist, der sich parallel zur Spitze (80) des Winkels zwischen dem ersten Arm (76) und dem zweiten Arm (78) des Hebels (74) und im wesentlichen entlang dem kleinen Durchmesser der länglichen Öffnung (114) erstreckt, wobei dieser kleine Durchmesser geringfügig größer als der Durchmesser des zylindrischen Abschnittes (100') ist, wobei der erste Arm (76) des Hebels (74) auf diese Weise zwei Spitzen (120) auf der einen und auf der anderen Seite der Öffnung (114) aufweist, wobei der erste Arm (76) des Hebels (74) an der Mutter (66) mittels der Spitzen (120) anliegt, wenn die Betätigungsmittel betätigt werden.

5. Zwischenstück nach Anspruch 4, dadurch gekennzeichnet, daß die Höhe des zylindrischen Abschnittes (100') der Mutter (66) geringfügig größer als die Höhe (H) der Spitzen (120) des Knicks ist.

6. Zwischenstück nach einem der vorhergehenden Ansprüche, dadurch gekennzeichnet, daß die Mutter (66) dann, wenn sich die Betätigungsmittel (28, 50) in der Ruhestellung befinden, direkt an einer Fläche (84) des Körpers (58) des Zwischenstücks (44) anliegt.

## Claims

1. Automatic adjustment strut for a drum brake, intended to be mounted in the vicinity of actuating means (28, 50) located between two first ends (30, 32) of two shoes (12, 14) lined with friction pads (24, 26), the strut (44) bearing via each of its ends (46, 48) on each of the two shoes (12, 14) and including a body (58) and a device (62, 68, 70) for automatic extension depending on the wear of the friction pads (24, 26), this device being formed by a screw-nut system (60) controlled by a pawl (70) urging toothing (68) secured to one (66) of the elements of the screw-nut system (60), the pawl (70) being carried by an elastic strip (72) secured to the body (58) of the strut (44), the elastic strip (72) being separated from the body (58) of the strut (44), when the brake is in the position of rest, by means of a lever (74) which, by tilting, allows the elastic strip (72) and the body (58) of the strut (44) to move closer together when the shoes (12, 14) are urged apart by the actuating means (28, 50), the lever (74) including a first arm (76) bearing on the nut (66) of the screw-nut system (60) and pierced with an oblong opening (108, 110, 112; 114) through which the screw (62) of the screw-nut system (60) passes, and a second arm (78) forming a vertex (80) of angle greater than 90° with respect to the first arm (76) and located between the body (58) of the strut (44) and the elastic strip (72), the strut (44) being characterized in that the first arm (76) of the lever (74) bears on the nut (66), when the actuating means (28, 50) are implemented, at two zones (112, 120) which are substantially diametrically opposite with respect to the axis of symmetry of the nut (66).

2. Strut according to Claim 1, characterized in that the nut (66) is formed with a stepped cylindrical part (100) exhibiting a shoulder (102) between a cylindrical part of smaller diameter (104) and an intermediate part (106), and in that the opening (108, 110, 112) in the first arm (76) of the lever (74) includes a first substantially semicircular contour (108), the radius of which lies between those of the cylindrical parts (104, 106) of the stepped cylindrical part (100) of the nut (66), and a second substantially semicircular contour (110), the radius of which is greater than that of the intermediate part (106) of the stepped cylindrical part (100) of the nut (66), the first (108) and second (110) contours being joined together by two shoulders (112), the first arm (76) of the lever (74) bearing on the shoulder (102) of the nut (66), when the actuating means (28, 50) are implemented, via the shoulders (112).

3. Strut according to Claim 2, characterized in that the height of the cylindrical part (104) of smaller diameter is slightly greater than the thickness of the first arm (76) of the lever (74).

4. Strut according to Claim 1, characterized in that the nut (66) is formed with a cylindrical part (100'), a shoulder (102') being formed at the joint between the cylindrical part (100') and the body of the nut (66), and in that the first arm (76) of the lever (74) is formed with an undulation extending parallel to the vertex (80) of the angle between the first (76) and second (78) arms of the lever (74) and substantially along the small diameter of the oblong opening (114), this small diameter being slightly greater than the diameter of the cylindrical part (100'), the first arm (76) of the lever (74) thus exhibiting two vertices (120) on either side of the opening (114), the first arm (76) of the lever (74) bearing on the nut (66), when the actuating means are implemented, by the vertices (120).

5. Strut according to Claim 4, characterized in that the height of the cylindrical part (100') of the nut (66) is slightly greater than the height (H) of the vertices (120) of the undulation.

6. Strut according to any one of the preceding claims, characterized in that the nut (66) bears, when the actuating means (28, 50) are at rest, directly on a face (84) of the body (58) of the strut (44).
